# FASCICULE DE BREVET EUROPEEN

(11) **EP 3 044 054 B1**
(45) Date de publication et mention de la délivrance du brevet: **06.05.2020**
(21) Numéro de dépôt: 14761907.6
(22) Date de dépôt: 11.09.2014
(51) Int. Cl.: B60T 8/32, B60T 8/17

(54) **PROCEDE DE GESTION DU FREINAGE D'UN AERONEF AVEC MESURE DE VITESSE A PROXIMITE DES ROUES FREINEES**
FLUGZEUGBREMSSTEUERVERFAHREN, MIT RADNAHER RADDREHZAHLMESSUNG
AIRCRAFT BRAKE MANAGEMENT METHOD, WITH WHEEL SPEED MEASUREMENT IN WHEEL PROXIMITY

(30) Priorité: 13.09.2013 FR 1358852
(43) Date de publication de la demande: 20.07.2016
(73) Titulaire: Safran Landing Systems, 78140 Vélizy-Villacoublay (FR)
(72) Inventeur: FRANK, David, F-78140 Velizy-Villacoublay (FR)
(74) Mandataire: Lavialle, Bruno François Stéphane
(86) Numéro de dépôt international: PCT/EP2014/069461
(87) Numéro de publication internationale: WO 2015/036520

(56) Documents cités:
- EP-A2- 2 567 873
- US-A- 3 920 282
- US-A1- 2007 265 739

## Description

L'invention concerne un procédé de gestion du freinage d'un aéronef comportant une mesure d'une caractéristique inertielle (accélération, vitesse) directement à proximité des freins

### ARRIERE PLAN DE L'INVENTION

On connaît des aéronefs munis d'atterrisseurs portant des roues freinées. Le freinage est géré par un calculateur de freinage qui délivre des consignes de freinage à destination d'organes de distribution de puissance (servovalves pour les freins hydrauliques, onduleurs commandés ou EMACs pour les freins électromécaniques) qui distribuent une puissance de freinage (pression ou intensité régulées) vers les freins. Les consignes de freinage sont généralement élaborées pour chacune des roues freinées en tenant compte d'un taux de glissement de consigne à appliquer à la roue, qui se calcule en comparant la vitesse longitudinale de l'aéronef à la vitesse périphérique estimée de la roue. Si une différence apparaît, c'est le signe que la roue part au blocage, et qu'il convient de diminuer la consigne de freinage jusqu'à ce que la roue se remette à tourner suffisamment de sorte que sa vitesse périphérique soit égale à la vitesse longitudinale diminuée de la vitesse de glissement calculée à l'aide du taux de glissement de consigne. La vitesse longitudinale de l'aéronef est en général fournie par la centrale inertielle de l'aéronef. Le document US2007/0265739 A1 décrit un procédé de gestion du freinage aéronef, dans lequel la vitesse périphérique de la roue est considérée.

### OBJET DE L'INVENTION

L'objet de l'invention est notamment d'améliorer la gestion du freinage d'un aéronef, et de pouvoir proposer de nouvelles fonctionnalités.

### RESUME DE L'INVENTION

En vue de la réalisation de ce but, on propose un procédé de gestion du freinage d'un aéronef équipé d'atterrisseurs portant des roues freinées, le procédé comportant l'étape de générer des consignes de freinage au moyen d'un calculateur de freinage pour chacune des roues freinées en fonction d'une différence entre une vitesse périphérique de la roue estimée à l'aide d'un tachymètre générant un signal représentatif de la vitesse de rotation de la roue, et une vitesse longitudinale représentative d'un mouvement longitudinal des roues concernées. Selon l'invention, l'information de vitesse longitudinale utilisée pour la génération des consignes de freinage est élaborée à l'aide d'un signal d'un capteur distinct du tachymètre disposé au bas de l'atterrisseur à proximité des roues freinées, permettant d'estimer la vitesse longitudinale au niveau de la roue qui peut différer transitoirement de la vitesse longitudinale de l'aéronef.

Ainsi, plutôt que d'utiliser une information de vitesse longitudinale générée par la centrale inertielle de l'aéronef, on utilise un signal mesuré au plus près des roues au moyen d'un capteur dédié distinct du tachymètre et qui permet d'estimer précisément la vitesse longitudinale au niveau de la roue, qui peut différer transitoirement de la vitesse longitudinale de l'aéronef en raison de la souplesse de l'atterrisseur et de la structure de l'aéronef. Compte tenu du délai de rafraichissement des consignes de freinage (de l'ordre du dixième de seconde), le procédé de l'invention permet de disposer d'une information pertinente de la vitesse longitudinale instantanée de la roue concernée, évitant ainsi de prendre pour un blocage ce qui est seulement un effet de la souplesse de l'atterrisseur et de la structure du fuselage. Le procédé de l'invention permet donc d'améliorer l'efficacité du freinage.

En pratique, et selon un mode préféré de mise en œuvre, le capteur comprend au moins un accéléromètre disposé à proximité des roues, par exemple dans un boîtier électronique fixé en bas de l'atterrisseur, et adapté à mesurer l'accélération longitudinale subie par le bas de l'atterrisseur. Le signal d'accélération est alors filtré puis traité pour en déduire une information de vitesse longitudinale qui est représentative de la véritable vitesse longitudinale des roues freinées portées par cet atterrisseur.

La disposition d'un tel capteur à proximité des roues permet de nouvelles fonctionnalités. Par exemple, le signal du capteur peut être utilisé pour estimer l'effort de freinage développé par les freins des roues freinées portées par l'atterrisseur concerné. On peut dès lors mettre en place un contrôle du taux de montée en effort de freinage pour améliorer le confort des passagers, et garantir un niveau maximal d'effort qui permet de dimensionner plus finement les pièces structurales soumises aux effets du freinage (atterrisseurs, attaches de l'atterrisseur, structure de l'aéronef...)

En outre, si le capteur comporte un accéléromètre adapté à mesurer des accélérations verticales, le signal correspondant pourra être utilisé pour estimer un effort vertical subi par la partie basse de l'atterrisseur, que l'on nomme également partie suspendue, puisque reliée au reste de l'atterrisseur au moyen d'un amortisseur. Une telle estimation permet de repérer les cas d'atterrissage dur pouvant nécessiter une intervention de maintenance sur l'atterrisseur.

### BREVE DESCRIPTION DES DESSINS

L'invention sera mieux comprise à la lumière de la description qui suit de modes particuliers de mise en œuvre non limitatifs de l'invention, en référence aux figures des dessins annexés parmi lesquelles :
- la figure 1 est une vue schématique d'un aéronef muni d'un atterrisseur portant des roues freinées et muni d'un boîtier électronique équipé d'accéléromètres ;
- la figure 2 est une vue schématique du boîtier équipé d'accéléromètre et monté sur le bus de l'atterrisseur ;
- la figure 3 est un diagramme montrant la vitesse estimée grâce au signal de l'accéléromètre, et la vitesse au centre de gravité de l'aéronef telle que fournie par la centrale inertielle de l'aéronef ;
- la figure 4 est une vue d'une roue dont l'essieu est équipé d'un boîtier renferment un accéléromètre.

### DESCRIPTION DETAILLEE DE L'INVENTION

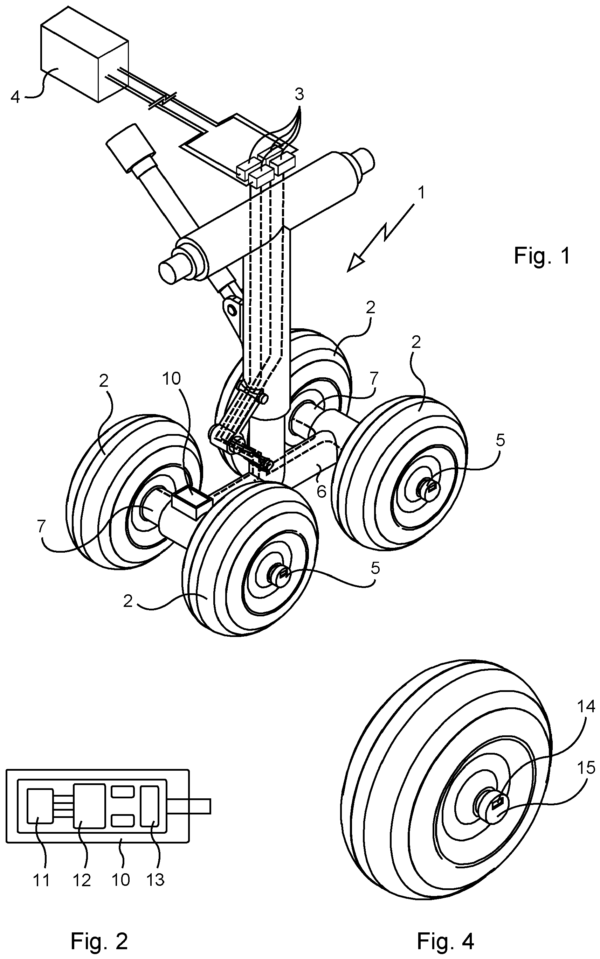

En référence à la figure 1, l'invention s'applique à un aéronef équipé d'atterrisseurs 1 qui portent des roues 2 équipées de freins. L'aéronef comporte des organes de distribution de puissance 3 (par exemple des servovalves dans le cas de freins hydrauliques) qui sont commandés électriquement pour fournir aux freins une puissance (par exemple un fluide sous pression régulée) en réponse à une consigne de freinage élaborée par un calculateur de freinage 4 disposé dans la baie avionique de l'aéronef. Pour élaborer la consigne de freinage d'une roue donnée, le calculateur reçoit le signal d'un tachymètre 5 représentatif de la vitesse de rotation de la roue. Grâce à quoi le calculateur estime la vitesse périphérique de la roue par la formule v=R x w, où w est la vitesse de rotation estimée à partir du signal du tachymètre 5, et R est le rayon de roulement de la roue.

Cette vitesse doit être comparée à une vitesse longitudinale représentative d'une vitesse de déplacement longitudinal de la roue. Pour ce faire, et conformément à l'invention, on équipe l'atterrisseur d'un boîtier électronique 10 comportant un accéléromètre 11 adapté à mesurer une accélération longitudinale du bas de l'atterrisseur. Ici, le boîtier 10 est fixé sur le balancier 6 qui porte les essieux 7 recevant les roues de l'atterrisseur. Le boîtier peut être également fixé sur la tige coulissante de l'atterrisseur à l'extrémité de laquelle le balancier est articulé. Pour des atterrisseurs ne portant que deux roues, le boîtier peut être fixé sur la tige coulissante. Il est essentiel que le boîtier soit disposé à proximité des roues, sur une partie non suspendue de l'atterrisseur.

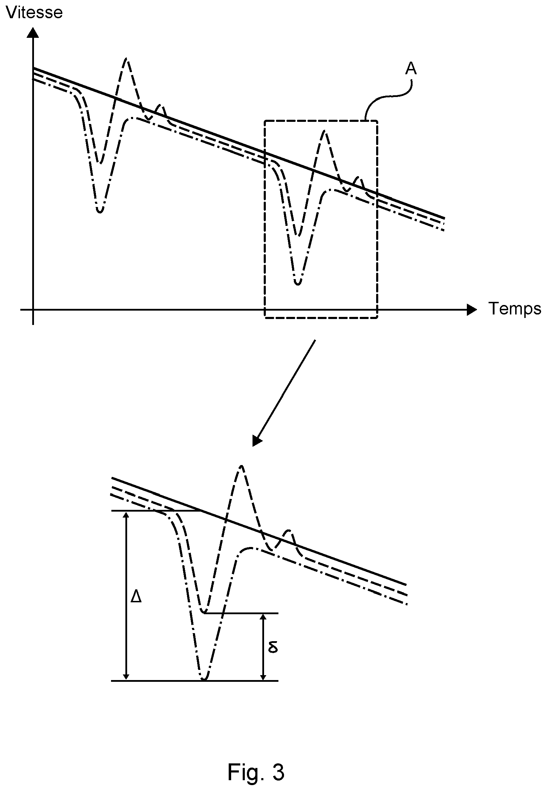

Le signal de l'accéléromètre 11 est traité par une unité de traitement 12 (filtrage, conditionnement...) pour générer une information de vitesse longitudinale V du bas de l'atterrisseur, qui est illustrée sur le diagramme de la figure 3. On y voit en trait pointillés l'information de vitesse longitudinale du bas de l'atterrisseur ainsi déterminée, en traits pleins la vitesse de l'aéronef telle que fournie par la centrale inertielle et en traits mixtes la vitesse périphérique de la roue. On constate sur la figure les différences de vitesses longitudinales, qui sont attribuables à la souplesse de l'atterrisseur et de la structure de l'aéronef, et qui font que ce qui pourrait être détecté comme un départ au blocage n'en est pas un. Par exemple, sur le détail A, on distingue un écart significatif Ä entre la vitesse périphérique de la roue et la vitesse longitudinale fournie par la centrale inertielle, alors que la différence δ entre la vitesse périphérique de la roue et la vitesse longitudinale mesurée localement n'est pas significative. Alors que l'écart Δ aurait entraîné la détection d'un départ au blocage, la prise en compte de la différence réelle δ permet d'éviter de telles fausses détections qui entraînent le relâchement de l'effort de freinage. Cette disposition de l'invention permet d'améliorer le contrôle du freinage.

Selon un autre aspect de l'invention, le signal de l'accéléromètre 11 est utilisé par le calculateur de freinage 4 pour estimer un effort longitudinal subi par le bas de l'atterrisseur. Cet effort est représentatif, à l'inertie près des masses portées par le bas de l'atterrisseur, de l'effort de freinage généré par les freins des roues portées par l'atterrisseur. L'estimation de l'effort de freinage par le moyen de l'invention permet de mettre en œuvre des stratégies de limitation du taux de montée en effort de freinage plus efficace que les stratégies actuellement utilisées, comme la limitation de l'augmentation de pression qui est en général effectuée de façon très conservative compte tenu de la dispersion des gains des freins. Ces stratégies sont mises en œuvre pour éviter toute surcharge de la structure de l'aéronef lors de la montée de l'effort de freinage. Elle concerne particulièrement les aéronefs à fuselage longs et relativement souples, comme par exemple l'Airbus A340-600. L'estimation directe de l'effort de freinage développé par les roues portées par un atterrisseur permet de mettre en œuvre un contrôle fin, s'accommodant de toutes les dispersions possibles des gains des freins concernés.

Selon encore un autre aspect de l'invention, on équipe le boîtier électronique 10 d'un deuxième accéléromètre 13 adapté à mesurer l'accélération verticale subie par le bas de l' atterrisseur. De la même façon, le signal de l'accéléromètre 13 est filtré et traité pour estimer un effort vertical subi par le bas de l'atterrisseur, qui est la partie suspendue de ce dernier. L'information d'effort vertical peut être utilisée pour déclencher des alertes en cas d'atterrissage dur ou en cas roulage hors-piste générant d'importantes secousses susceptibles d'induire une action de maintenance sur l'atterrisseur et les roues associées.

L'invention se prête à de nombreuses variantes. On pourra prévoir de mesurer d'autres accélérations, comme une accélération latérale permettant d'estimer les efforts latéraux subis par l'atterrisseur en virage, ou encore de mesure des accélérations angulaires de la partie basse de l'atterrisseur (au moyen de gyromètres par exemple, ou encore d'accéléromètre disposés à l'extrémité d'un balancier d'un atterrisseurs à bogie) permettant d'estimer des taux de vitesse de rotation instantanée subie par la partie basse de l'atterrisseur, ou une torsion subie par cette même partie basse. On pourra également spécialiser les signaux en prévoyant autant de capteurs que de roues. Par exemple, comme illustré à la figure 3, pour chaque roue on place un accéléromètre 14 directement dans un boîtier 15 rapporté sur l'extrémité de l'essieu portant ladite roue qui renferme également le tachymètre. On mesure alors au plus près l'accélération longitudinale subie par la roue, de sorte que la vitesse longitudinale estimée à partir de ladite accélération est très proche de la vitesse longitudinale véritable de la roue.

Selon un aspect particulier de l'invention, on profite de la présence du capteur en bas de l'atterrisseur pour générer des alertes de maintenance ou pour suivre l'état de santé de l'atterrisseur.

En particulier, si le capteur comprend un accéléromètre apte à détecter les atterrissages durs (par exemple quand l'effort vertical estimé à l'aide du deuxième accéléromètre dépasse un seuil déterminé) l'information de l'accéléromètre est exploitée pour générer une alerte qui sera diffusée au pilote et/ou stockée dans un journal de bord. Plus généralement, tout type de surveillance de l'état de santé de l'atterrisseur peut être mis en œuvre avec les signaux issus du capteur de l'invention.

## Revendications

1. Procédé de gestion du freinage d'un aéronef équipé d'atterrisseurs (1) portant des roues freinées (2), le procédé comportant l'étape de générer des consignes de freinage au moyen d'un calculateur (4) de freinage pour chacune des roues freinées en fonction d'une différence entre une vitesse périphérique de la roue estimée à l'aide d'un tachymètre générant un signal représentatif de la vitesse de rotation de la roue, et une vitesse longitudinale représentative d'un mouvement longitudinal des roues concernées, **caractérisé en ce que** l'information de vitesse longitudinale utilisée pour la génération des consignes de freinage est élaborée à l'aide d'un signal d'un capteur distinct du tachymètre disposé au bas de l'atterrisseur à proximité des roues freinées, permettant d'estimer la vitesse longitudinale au niveau de la roue qui peut différer transitoirement de la vitesse longitudinale de l'aéronef.

2. Procédé selon la revendication 1, dans lequel le capteur est monté dans un boîtier (10 ; 15) fixé sur une tige coulissante de l'atterrisseur, un balancier de l'atterrisseur, ou un essieu de l'atterrisseur.

3. Procédé selon la revendication 2, dans lequel le boîtier comporte des moyens de filtrage et de conditionnement du signal du capteur.

4. Procédé selon la revendication 1 dans lequel le capteur comprend un premier accéléromètre apte à mesurer une accélération longitudinale subie par le bas de l'atterrisseur.

5. Procédé selon la revendication 4, dans lequel le calculateur de freinage est adapté à utiliser le signal du premier accéléromètre pour estimer un effort longitudinal subi par le bas de l'atterrisseur.

6. Procédé selon la revendication 4, dans lequel le capteur comprend un deuxième accéléromètre apte à mesurer une accélération verticale subie par le bas de l'atterrisseur.

7. Procédé selon la revendication 1, dans lequel le calculateur de freinage est adapté à utiliser le signal du deuxième accéléromètre pour estimer un effort vertical subi par le bas de l'atterrisseur.

8. Procédé selon la revendication 7, dans lequel le signal du deuxième accéléromètre est exploité pour détecter et signaler des atterrissages durs.

## Patentansprüche

1. Verfahren zum Steuern der Bremsung eines Luftfahrzeugs, das mit Fahrwerken (1) ausgestattet ist, die gebremste Räder (2) tragen, wobei das Verfahren den Schritt des Erzeugens von Bremsanweisungen mittels eines Bremsrechners (4) für jedes der gebremsten Räder in Abhängigkeit von einer Differenz zwischen einer Umfangsgeschwindigkeit des Rades, die mittels eines Tachometers geschätzt wird, der ein Signal erzeugt, das repräsentativ für die Drehgeschwindigkeit des Rades ist, und einer für eine Längsbewegung der betreffenden Räder repräsentativen Längsgeschwindigkeit umfasst, **dadurch gekennzeichnet, dass** die Längsgeschwindigkeitsinformation, die für die Erzeugung der Bremsanweisungen verwendet wird, mittels eines Signals eines von dem Tachometer getrennten Sensors gewonnen wird, der an der Unterseite des Fahrwerks nahe den gebremsten Rädern angeordnet ist, wodurch ein Schätzen der Längsgeschwindigkeit im Bereich des Rades ermöglicht wird, die von der Längsgeschwindigkeit des Luftfahrzeugs vorübergehend abweichen kann.

2. Verfahren nach Anspruch 1, bei dem der Sensor in einem Gehäuse (10; 15) montiert ist, das an einer Schubstange des Fahrwerks, einem Schwinghebel des Fahrwerks oder einer Radachse des Fahrwerks befestigt ist.

3. Verfahren nach Anspruch 2, bei dem das Gehäuse Mittel zum Filtern und Konditionieren des Signals des Sensors umfasst.

4. Verfahren nach Anspruch 1, bei dem der Sensor einen ersten Beschleunigungsmesser umfasst, der dazu geeignet ist, eine Längsbeschleunigung zu messen, die von der Unterseite des Fahrwerks erfahren wird.

5. Verfahren nach Anspruch 4, bei dem der Bremsrechner dazu geeignet ist, das Signal des ersten Beschleunigungsmessers zu verwenden, um eine Längskraft zu schätzen, die von der Unterseite des Fahrwerks erfahren wird.

6. Verfahren nach Anspruch 4, bei dem der Sensor einen zweiten Beschleunigungsmesser umfasst, der dazu geeignet ist, eine vertikale Beschleunigung zu messen, die von der Unterseite des Fahrwerks erfahren wird.

7. Verfahren nach Anspruch 1, bei dem der Bremsrechner dazu geeignet ist, das Signal des zweiten Beschleunigungsmessers zu verwenden, um eine vertikale Kraft zu schätzen, die von der Unterseite des Fahrwerks erfahren wird.

8. Verfahren nach Anspruch 7, bei dem das Signal des zweiten Beschleunigungsmessers genutzt wird, um harte Landungen zu erfassen und zu signalisieren.

## Claims

1. Method for managing the braking of an aircraft fitted with undercarriages (1) bearing braked wheels (2), the method comprising the step of generating braking commands by means of a braking computer (4) for each of the braked wheels as a function of a difference between a peripheral speed of the wheel estimated using a tachometer generating a signal representative of the speed of rotation of the wheel, and a longitudinal speed representative of a longitudinal movement of the wheels in question, **characterized in that** the longitudinal speed information used for the generation of the braking commands is generated with the help of a signal from a sensor separate from the tachometer disposed at the bottom of the undercarriage close to the braked wheels, making it possible to estimate the longitudinal speed at the level of the wheel which can transiently differ from the longitudinal speed of the aircraft.

2. Method according to Claim 1, wherein the sensor is mounted in a housing (10; 15) fixed on a sliding rod of the undercarriage, a beam of the undercarriage, or an axle of the undercarriage.

3. Method according to Claim 2, wherein the housing comprises means of filtering and conditioning the signal from the sensor.

4. Method according to Claim 1, wherein the sensor comprises a first accelerometer capable of measuring a longitudinal acceleration undergone by the bottom of the undercarriage.

5. Method according to Claim 4, wherein the braking computer is adapted for using the signal from the first accelerometer in order to estimate a longitudinal force undergone by the bottom of the undercarriage.

6. Method according to Claim 4, wherein the sensor comprises a second accelerometer capable of measuring a vertical acceleration undergone by the bottom of the undercarriage.

7. Method according to Claim 1, wherein the braking computer is adapted for using the signal from the second accelerometer in order to estimate a vertical force undergone by the bottom of the undercarriage.

8. Method according to Claim 7, wherein the signal from the second accelerometer is used for detecting and signalling hard landings.
